# EUROPEAN PATENT APPLICATION

(11) **EP 2 835 349 A1**
(43) Date of publication of application: **11.02.2015**
(21) Application number: 13179934.8
(22) Date of filing: 09.08.2013
(51) Int. Cl.: C01B 25/45, H01M 4/1391

(54) **Process for the preparation of an electrode material and its use in lithium-ion batteries**

(71) Applicant: BASF SE, 67056 Ludwigshafen (DE)
(72) Inventor: Krkljus, Ivana Dr., 67063 Ludwigshafen (DE)

(57) **Abstract**

The present invention relates to a process for the preparation of lithium iron phosphate-type electrode materials. The process comprises preparing a mixture comprising water, at least one carboxylic acid, at least one water-soluble or water-swellable organic polymer, and the precursors necessary to generate compound of general formula (I), wherein the weight ratio of the at least one carboxylic acid and the at least one water-soluble or water-swellable organic polymer is from 80 : 20 to 20 : 80, drying this mixture, and heating the dried mixture to more than 300 °C.

## Description

The present invention is in the field of LiFePO₄ electrodes employable in devices for the direct conversion of chemical energy into electrical energy, such as batteries.

The present invention relates to a process for the preparation of particles comprising at least one compound comprising lithium, iron in the oxidation state +2, phosphor, oxygen, and carbon and to the use of these particles for the preparation of an electrode of a lithium-ion battery.

Energy storage in lithium-ion batteries is an important topic to current research. High energy storage densities can only be achieved with highly efficient electrode materials. Lithium iron phosphate and its derivatives are among the most promising currently available electrode materials due to their comparatively high capacity even at high current density, their relatively low toxicity, and their generally low-cost precursor materials. To increase the electrical conductivity of lithium iron phosphate particles, it is beneficial to incorporate conductive carbon into these particles. Processes for the preparation of particles comprising LiFePO₄ and optionally carbon are known from prior art.

CN 102 881 902 A describes a process for the preparation of LiFePO₄ by mixing a lithium compound, an iron compound, a phosphor compound, and a carbon compound and heating it to high temperatures.

The object of the present invention is to provide a process for preparing a LiFePO₄-type electrode material of high energy storage capacity. It is further an object of the present invention to provide a process for preparing an electrode material with less decrease in energy storage capacity at high current density in comparison to materials from prior art. Furthermore, it is object of the present invention to make a material available which can be used to produce electrodes in lithium-ion batteries with high performance.

These objects are achieved by a process for producing an electrode material containing at least one compound of general formula (I):

Li_{a-b}M¹_{b}Fe_{1-c}M²_{c}P_{d-e}M³ₑOₓ (I),

wherein Fe has the oxidation state +2 and M¹, M², M³, a, b, c, d, e and x are:
- M¹:: Na, K, Rb, Cs, and/or Ca
- M²:: Mn, Mg, Al, Ti, Co, Ni, Cr, V, Cu, Zn, Cl, As, and/or Mo
- M³:: Si, S, and/or F
- a:: 0.8 - 1.9,
- b:: 0 - 0.3,
- c:: 0 - 0.9,
- d:: 0.8 - 1.9,
- e:: 0 - 0.5,
- x:: 1.0 - 8, depending on the amount and oxidation state of Li, M¹, M², P, M³, wherein compounds of general formula (I) are neutrally charged,
which comprises:
(A) preparing a mixture comprising water, at least one carboxylic acid, at least one water-soluble or water-swellable organic polymer, and the precursors necessary to generate compound of general formula (I) (mixture A), wherein the weight ratio of the at least one carboxylic acid and the at least one water-soluble or water-swellable organic polymer is from 80 : 20 to 20 : 80 and
(B) drying mixture A, and
(C) heating dried mixture A to more than 300 °C.

The electrode material obtained by a process according to the current invention can be used for the preparation of an electrode of a lithium-ion battery.

The current invention also relates to a method of producing a lithium-ion battery using the electrode material obtained by a process according to the current invention.

The current invention also relates to electrodes containing electrode material obtained by a process according to the current invention.

The current invention also relates to lithium-ion batteries containing at least one electrode according to the current invention.

Preferred embodiments of the present invention can be found in the description and the claims. Combinations of different embodiments fall within the scope of the current invention.

In the present invention M¹, M², M³, a, b, c, d, e and x preferably have the following meanings:
- M¹:: Na,
- M²:: Mn, Mg, Al, Ca, Ti, Co, and/or Ni,
- M³:: Si, S, and/or F,
- a:: 0.6 - 1.6, particularly preferred 0.9 - 1.3,
- b:: 0 - 0.1, particularly preferred 0 - 0.05,
- c:: 0 - 0.6, particularly preferred 0 - 0.3,
- d:: 0.6 - 1.6, particularly preferred 0.9 - 1.3,
- e:: 0 - 0.3, particularly preferred 0 - 0.1,
- x:: 2 - 6, depending on the amount and oxidation state of Li, M¹, M², P, M³,
wherein compounds according to general formula (I) are neutrally charged.

It is further preferred that M¹, being for example Na, is present in an amount of up to 10 mol-%, in respect of the sum of Li and M¹. It is further preferred that M², being for example Mn, is present in an amount of up to 30 mol-%, in respect of the sum of iron (II) and M² present in the compound. It is further preferred that M³, being for example Si, is present in an amount of up to 10 mol-%, in respect of the sum of phosphor and M³.

More preferably, M¹, M² and M³ are absent or essentially absent, in order to have a neutrally charged compound of general formula (I) LiFePO₄, in which Fe is in oxidation state +2. Essentially absent means that M¹, M² and M³ are only present as traces typically introduced by impurities of the ingredients employed in the process according to the invention. Traces normally means that the weight of an element not present in general formula (I) is generally not more than 0.5 % of the weight of the compound of general formula (I). Therefore, the process according to the present invention is very preferably conducted in order to obtain the compound of formula LiFePO₄.

According to the invention mixture A contains at least one carboxylic acid. It can be chosen from all carboxylic acids known to the person skilled in the art. Carboxylic acids comprise aromatic and aliphatic acids. Examples for aromatic acids are benzoic acid, salicylic acid, cinnamic acid, vanillic acid, anisic acid, cumaric acid, phthalic acid, terephthalic acid, mesitylene tricarboxylate. Preferably, at least one aliphatic acid is used comprising saturated alkyl carboxylates like oxalic acid or succinic acid, unsaturated alkyl carboxylates like oleic acid, hydroxy carboxylates like lactic acid, oxo carboxylates like pyruvic acid, amino acids like glycine and halogenated acids like trochloro acetic acid. Hydroxy carboxylates are preferred. It is preferred that all carboxylic acids used are aliphatic.

The at least one carboxylic acid can contain only one carboxyl group such as lauric acid. Preferably, it contains at least two carboxyl groups such as fumaric acid, glutaric acid, aspartic acid, tartric acid or malic acid. More preferably, it contains at least three carboxyl groups such as citric acid, isocitric acid, aconitic acid, or propane-1,2,3-tricarboxylic acid, particularly citric acid.

It is known to the person skilled in the art that when carboxylic acids are brought in contact with bases in aqueous media, they are neutralized to their salts. Bases, for example LiOH, can be present in mixture A according to the invention, so the at least one carboxylic acid may be converted into its salt, for example its lithium salt, upon preparation of mixture A. Consequently, it is also possible to start with at least one salt of the at least one carboxylic acid, preferably with the lithium or ammonium salt. Salts with other cations may introduce elements into compound of general formula (I) which may be undesired. If salts with non-volatile cations containing elements which are desired in compound of general formula (I) are used, the amounts of the other precursors have to be adjusted such that the molar ratio of these elements in mixture A equals that in compound of general formula (I). Non-volatile cations in the context of the present invention mean that the cations do not decompose forming gases under the conditions of thermal treatment (C). It is preferred to use the at least one carboxylic acid in its acid form.
According to the invention mixture A also contains at least one water-soluble or water-swellable organic polymer. Typically, the at least one water-soluble organic polymer can be dissolved in water to form a stable solution from which the polymer does not precipitate. In general, water-soluble means that an aqueous solution containing 5 % by weight of polymer can be prepared from a very pure polymer sample which is clear at room temperature. The at least one water-swellable polymer takes up more or less water. Water-swellable usually means that the polymer can form a gel with water. Such gels often contain more water than polymer. Preferably, at least one water-swellable organic polymer is used.

Weight-average molecular weights of the at least one organic polymer is typically in the range of 1000 to 10⁹ g/mol. For this invention, it is preferred to use at least one polymer with a weight-average molecular weight in the range of 10⁵ to 10⁹ g/mol, particularly in the range of 10⁶ to 10⁹ g/mol. Molecular weights of organic polymers are typically measured by size-exclusion chromatography or light scattering. Size exclusion chromatography is preferred. The measurement can be done in aqueous solution at slightly elevated temperatures such as 40 °C. It is preferential to adjust the pH to about 7 by using a buffer such as a phosphate buffer. As stationary phase fused silica columns can be used. To get the molecular weight, the eluation time measured with a refractive index detector is compared to references, for example to pullulan standards.

The at least one organic polymer may be linear, branched, comb-like, or slightly crosslinked. The at least one polymer is preferably branched or slightly crosslinked, characterized by a low crosslinking density, i.e. the molar ratio of crosslinking monomers to the total monomer amount. In general, upon moderate crosslinking water-soluble polymers turn into water-swellable polymers. If the crosslinking density is high, polymers turn into insoluble resins. Typically, the cross-linking density for water-swellable polymers is lower than 5 %, preferably less than 1 %.

The at least one organic polymer comprises both homopolymers and copolymers. Copolymers obtained from any combination of monomers known to the person skilled in the art can be used as long as they are water-soluble or water-swellable. Copolymers can be used with different architecture including random, block, or graft copolymers.

The term "at least one organic polymer" in the present invention comprises both one organic polymer of a particular monomer composition and more than one organic polymer each of different monomer composition. It also comprises mixtures of different polymers as long as at least one of the polymers in the mixture is water-soluble or water-swellable. Likewise, it comprises mixture of water-soluble or water-swellable polymers with low molecular weight additives like for example plasticizers or stabilizers.

A wide variety of organic polymers can be employed in the process according to the present invention with the proviso that they have the respective water solubility or water swellability. These polymers include synthetic and natural polymers. Synthetic polymers comprise aliphatic polyvinyl polymers, for example polyvinyl alcohol or polyvinyl acetate or polyvinyl pyrrolidone or polyvinyl caprolactam, aromatic polyvinyl polymers, for example polystyrene sulfonic acid, poly-acrylics, for example polyacrylic acid or its esters and amides, polyethers, for example polyethylene oxide or polypropylene oxide. Natural polymers comprise polypeptides like poly asparagine acid, proteins, poly nucleic acids, lignine sulfonate, or polysaccharides.

Preferably the organic polymer contains only the elements carbon, hydrogen, and oxygen. In the subsequent thermal treatment (C) organic polymers containing only these three elements decompose much better to conductive carbon without producing undesirable side products in contrast to organic polymers which also contain other elements like nitrogen, sulfur, or chlorine. Elements other than carbon, hydrogen, and oxygen are preferably not or essentially not contained in the at least one organic polymer such as less than 1 % by weight of the organic poly-mer, preferably less than 0.1 % by weight of the organic polymer, more preferably only in traces or not at all.

The at least one organic polymer in mixture A is preferably at least one polysaccharide. A polysaccharide in the sense of the present invention means that at least 50 % of the weight of the polysaccharide is attributed to at least one monosaccharide, preferably 75 % of the weight of the polysaccharide, more preferably 90 % of the weight of the polysaccharide. Most preferably the polysaccharide is built up by only or essentially only monosaccharide units.

In the present invention, physically or chemically modified polysaccharides are also understood as polysaccharides. Physical modifications can be achieved for example by heating, by exposure to irradiation, or by exposure to high shear. Chemical modifications can be achieved for example by reaction with small molecules like chloroacetic acid, by reaction with crosslinkers, by partial digestion with enzymes or acids, or by graft polymerization reactions. Examples for polysaccharides are pectin, alginate, carrageenan, agar, gum arabic, gum tragacanth, gum karaya, gum ghatti, guar gum, locust bean gum, tara gum, xanthan gum, gellan gum, modified cellulose, or starch.

Elements other than carbon, hydrogen, and oxygen are preferably not or essentially not contained in the at least one polysaccharide such as less than 1 % by weight of the polysaccharide, preferably less than 0.1 % by weight of the polysaccharide, more preferably only in traces or not at all.

The at least one organic polymer in mixture A is particularly preferably at least one starch. Generally, starch is obtained from plants like corn, wheat, potatoes, tapioca, or rice. The starch is separated from the other plant parts and usually obtained as granules with a wide range of sizes (from below 1 to 100 µm) and forms (spherical, ellipsoid, polygonal, lenticular, etc.). Recently, starch from genetically modified organisms is available with tailored properties. Also extracts from native starch like amylose or amylopectin fall under the scope of starch for the present invention.

For the present invention, modified starch is also regarded as starch. Starch can be modified chemically or physically. Chemical modifications include conversion, thinning, cross-linking, stabilization, bleaching, charging, and grafting. Generally, conversion of starch means partial depolymerization, for example by heating in the presence of an acid, by treating with an enzyme, like amylase, or by applying an oxidant in an alkaline system. Thinning is a particular form of conversion in which the molecular weight is only slightly reduced by an acid, such as hydrochloric acid. In a thinning process functional groups can be introduced into starch, for example by esterification of the alcohol groups of starch by the acid. Crosslinking of starch is accomplished by an at least bifunctional reagent which is attached to the starch chains. Examples for such molecules are phosphorous oxychloride, sodium trimetaphosphate, epichlorohydrine, or adipicacetic mixed anhydride. Stabilization of starch involves derivatization with a monofunctional reagent. A typical example for stabilization of starch is ester formation as in starch acetate, succinate, octenylsuccinate, or phosphates. Another example for stabilization of starch is ether formation as in hydroxyethyl starch, hydroxypropyl starch, or carboxymethyl starch. Bleaching of starch generally means the treatment with oxidants to brighten the starch. Typical bleaching agents are chlorine gas or hypochlorite salts like calcium hypochlorite. Starch can be charged by derivatization with reagents bearing a charge or a chargeable group. A typical example for such a reagent is 3-chloro-2-hydroxypropyltrimethylammonium chloride. Starch graft copolymers are derivatives in which synthetic polymers are covalently bonded to starch molecules, often by ether linkages. Often, these products are obtained by generation of free radicals in starch which can react with acrylic or vinyl monomers, like acrylic acid or vinyl acetate.

Physical modifications of starch are usually achieved by thermal treatment. The thermal treatment can be done in the presence of water or in dry form. If water is present, the thermal treatment is often referred to as pregelatinizing. The starch is heated in water and subsequently dried and optionally milled. In this way, the starch loses its original granular form. Preferably, the starch is not modified.

According to the invention the weight ratio of the at least one carboxylic acid and the at least one water-soluble or water-swellable organic polymer in mixture A is from 80 : 20 to 20 : 80. More preferably, this weight ratio is from 30 : 70 to 70 : 30, most preferably from 40 : 60 to 60: 40.

According to the invention mixture A may contain any amount of the at least one carboxylic acid and the at least one water-soluble or water-swellable organic polymer. Preferably, the amount is chosen such that the product obtained after thermal treatment (C) contains from 1.5 % to 5 % by weight carbon. Depending on the weight loss by decomposition of the at least one carboxylic acid and the at least one water-soluble or water-swellable organic polymer during thermal treatment (C), the amounts of these substances in mixture A have to be chosen accordingly. Typically, the total weight of the at least one carboxylic acid and the at least one water-soluble or water-swellable organic polymer in mixture A is between 5 % and 30 % by weight of the total weight of all precursors necessary to generate compound of general formula (I).
According to the invention mixture A also contains water. Water can contain impurities such as salts, organic compounds, or solvents. Usually, the impurities account for less than 5 % by weight of the water. Preferably, the impurities account for less than 1 % by weight of water, especially less than 0.1 % by weight of water. Most preferably, the impurities are if present at all only present as traces. Different water qualities can be used, particularly purified water, preferably deionized water.

Generally, the viscosity of mixture A should not be too high for good processability. This can in most cases be achieved by using more than 50 % by weight of mixture A water, preferably more than 65 % by weight, more preferably more than 80 % by weight.

When the at least one water-soluble or water-swellable organic polymer is in contact with water in mixture A, it either partially or fully dissolves or swells. In general, polymers dissolve or swell better at higher temperatures. The dissolution or swelling is also faster at higher temperatures. Preferably, mixture A is heated above its pasting temperature. It is even more preferable to heat the at least one water-soluble or water-swellable organic polymer with water above the pasting temperature and then add the remaining ingredients of mixture A. Generally, it is sufficient to heat mixture A above the pasting temperature for a short time, such as a few minutes. To make sure that mixture A is heated in all parts of the apparatus above the pasting temperature, it is preferred to keep the temperature above the pasting temperature for a prolonged time, for example from a few minutes to one or more than one hour, such as 30 minutes. For the same reason, it is preferred to heat mixture A to a temperature higher than the pasting temperature, for example 5 to 20 °C higher than the pasting temperature, such as 10 °C higher than the pasting temperature.

The pasting temperature is the temperature at which the viscosity sharply increases upon heating a cold mixture of the at least one water-soluble or water-swellable organic polymer in dry form and water. Typically, the viscosity of this mixture increases by a factor of more than ten when heating above the pasting temperature. The pasting temperature can be measured, for example, with a rapid visco-analyzer (RVA, see e.g. P. Limpisut and V.K. Jindal, Starch-Stärke 54, 8 (2002) 350-357).

According to the invention, mixture A further comprises precursors necessary to generate the compound of general formula (I). Depending on the composition of the compound of general formula (I), these precursors are at least one lithium-comprising compound, at least one ironcomprising compound, at least one phosphor-containing compound, at least one M¹-comprising compound, if present, and/or at least one M²-comprising compound, if present, and/or least one M³-comprising compound, if present, and potentially a reducing agent.

In general, all Li-, Fe-, P-, M¹-, M²-, and M³-comprising compounds known to a person having ordinary skill in the art which are able to be incorporated in an aqueous mixture can be used in the process according to the present invention. This means, that the compounds are for example soluble, dispersible, or emusifiable in water.

The at least one Li-comprising compound is preferably lithium hydroxide LiOH, lithium hydroxide-hydrate LiOH · H₂O, lithium acetate LiOAc, lithium carbonate Li₂CO₃, lithium-phosphates,-phosphites, -hypophosphites, like LiH₂PO₄, Li₂HPO₄, Li₃PO₄, LiH₂PO₃, Li₂HPO₃, or LiH₂PO₂, or any mixture thereof. Very preferably, lithium hydroxide LiOH and/or lithium hydroxide-hydrate LiOH · H₂O and/or lithium carbonate Li₂CO₃ are used as Li-comprising compounds of the process according to the present invention. Particularly preferred Li-comprising compound is lithium hydroxide LiOH or lithium hydroxide-hydrate LiOH · H₂O.

The at least one Fe-comprising compound includes all known iron compounds such as iron metal, iron oxids, hydroxides, fluorides, chlorides, bromides, iodides, sulfates, nitrates, nitrites, phosphates, phosphites, acetates, oxalates, lactates, acetylacetonate, or any mixture thereof.

Preferably, the at least one Fe-comprising compound has the oxidation state +3. More preferred are iron(II,III)-oxide, iron(III)-oxide, iron(III)-oxide hydroxide, or iron hydroxide, for example Fe₃O₄, α-Fe₂O₃, γ-Fe₂O₃, α-FeOOH, β-FeOOH, γ-FeOOH or Fe(OH)₃. Preferred are the α-, β-, or γ-modification of iron(III)-oxide hydroxide (FeOOH), particularly preferred are the α- or γ-modification of iron(III)-oxide hydroxide (FeOOH), α-FeOOH is especially preferred.

Preferably, the at least one Fe-comprising compound is α-FeOOH, β-FeOOH, or γ-FeOOH in a needle-shaped habitus, particularly preferred having a ratio of length to thickness of > 1.5, preferably > 2, particularly preferred > 5.

The at least one P-containing compound can be any compound known to the skilled artisan comprising at least one phosphor atom in the oxidation state +5. Preferred are H₃PO₄, (NH₄)H₂PO₄, (NH₄)₂HPO₄, (NH₄)₃PO₄, Li₃PO₄, LiH₂PO₄, Li₂HPO₄ or any mixture thereof. Particularly preferred are H₃PO₄, (NH₄)H₂PO₄, (NH₄)₂HPO₄ or any mixture thereof, very preferred is H₃PO₄.

The at least one M¹-comprising compound, if present, is preferably sodium hydroxide NaOH, sodium hydroxide-hydrate NaOH · H₂O, sodium acetate NaOAc, sodium carbonate Na₂CO₃, or any mixture thereof. Very preferably, sodium hydroxide NaOH and/or sodium hydroxide-hydrate NaOH · H₂O and/or sodium carbonate Na₂CO₃ are used as sodium-comprising compounds in the process according to the present invention. Particularly preferred sodium-comprising compounds are sodium hydroxide NaOH or sodium hydroxide-hydrate NaOH · H₂O.

The at least one M²-comprising compound, if present, comprises preferably as anion hydroxide, acetate, oxide, carbonate, halogenide, like fluoride, chloride, bromide, iodide, nitrate, or any mixture thereof. Very preferably, the anion of the at least one M²-comprising compound is acetate, oxide, hydroxide, carbonate, nitrate, or any mixture thereof.
The at least one M³-comprising compound, if present, is preferably H₂SO₄, (NH₄)HSO₄, (NH₄)₂SO₄, LiHSO₄, Li₂SO₄, finely divided SiO₂, e.g. in form of a sol, H₄SiO₄, Li-silicate, or any mixture thereof.

M¹-, M²-, and/or M³-comprising compounds are present in mixture A in amounts, in which they are present in compounds of formula (I). A person having ordinary skill in the art knows how to calculate the required amount.

According to the present invention, it is preferred to add at least one reducing agent to mixture A. In its presence, the temperatures of the thermal treatment (C) can generally be reduced. In some cases, the organic polymer can act as reducing agent. Normally, however, an additional substance is added as reducing agent. As reducing agent gaseous, liquid, and solid substances can be used which reduce iron to the oxidation state +2 during the process according to the invention. Gaseous reducing agents can be, for example, hydrogen, carbon monoxide, ammonia, and/or methane. It is particularly preferred to use the gases during thermal treatment (C). Examples for other reducing agents are compounds containing sulphur in an oxidation state lower than +6, compounds containing phosphor in an oxidation state lower than +5, compounds containing nitrogen in an oxidation state lower +3, or compound containing hydrogen in the oxidation state -1.

The at least one reducing agent is preferably oxidized to at least one compound comprising at least one phosphorous atom in oxidation state +5. If such a reducing agent is used, the amount of the at least one P-containing compound needs to be adjusted such that the molar ratio of the sum of all Fe-containing compounds in mixture A to the sum of all compounds which contain a phosphor atom in mixture A equals the molar ratio of Fe to P in general formula (I). Particularly preferred P-containing compounds are H₃PO₃, (NH₄)H₂PO₃, (NH₄)₂HPO₃, H₃PO₂, (NH₄)H₂PO₂, (NHa)₂HPO₂, LiH₂PO₃, Li₂HPO₃, Li₂PO₂ or any mixture thereof. More preferred is the use of H₃PO₃, (NH₄)H₂PO₃, (NH₄)₂HPO₃, a very preferred reducing agent is H₃PO₃.

The components of mixture A can be added in any conceivable order. For example, the at least one carboxylic acid and the at least one water-soluble or water-swellable organic polymer can be added to water first and then the precursors necessary to generate compound of general formula (I). Alternatively, the precursors necessary to generate compound of general formula (I) can be combined with water and the at least one carboxylic acid and the at least one water-soluble or water-swellable organic polymer added thereto. It is also possible to mix all ingredients except water first and add water afterwards. In a continuous process, mixture A can be prepared by bringing in contact different mixtures of ingredients at the same time further down the product flow. For example, each ingredient of mixture A is dissolved or suspended in parts of the water in mixture A and these solutions and/or suspensions are then brought in contact to each other.

According to the invention, mixture A is heated above the pasting temperature. It is possible to first add all ingredients at any temperature, for example room temperature, and then heat mixture A above the pasting temperature. It is also possible to combine the ingredients above the pasting temperature. Furthermore, it is possible to combine parts of the ingredients at any temperature, for example at room temperature, heat this intermediate mixture above the pasting temperature and then add the remaining ingredients. Preferably, water is heated above the pasting temperature and then the ingredients are added one by one to the heated water.

Mixture A can be prepared under air or under an inert atmosphere. Examples of inert gases are nitrogen, noble gases like helium or argon.

After its preparation mixture A is subjected to a drying process (B). Preferably, mixture A is dried convectively, i.e. liquids such as organic solvents and water are withdrawn while the mixture is in motion. The withdrawal of liquid can, for example, be brought about by application of a reduced pressure and/or thermally. Thermal drying is preferred. Mechanical motion can be effected, for example, by stirring, mixing in a rotary tube furnace or formation of a fluidized bed. The dry material can, for example, have a residual moisture content in the range from 0.5 to 10 % by weight with regard to the total mass of the dried mixture A, preferably from 1 to 8 % by weight, particularly preferably up to 5 % by weight.

Examples of suitable apparatuses for drying are convective dryers, in particular paste milling dryers, milling dryers, flow dryers, cyclone dryers, ring dryers, carousel dryers, fluidized-bed dryers, fluidized-bed spray granulators, rotary tube dryers, convection belt dryers, mixer-dryers, shaft dryers, convection drying oven, flash dryers, spin-flash dryers and particularly preferably spray dryers. Examples of spray dryers are nozzle towers, disk towers and spray dryers having an integrated fluidized bed.

Drying (B) is preferably carried out as atomization drying or spray drying. Spray drying can be carried out in a spray dryer, preferably in a drying tower, for example a nozzle tower, disk tower, spray dryer having an integrated fluidized bed. For this purpose, the mixture A is, in one variant, pressed through one or more spray devices, for example through one or more nozzles or over an atomizer disk, into a hot air stream or a hot inert gas stream, with the hot gas stream or the hot inert gas stream being able to have a temperature in the range from 80 to 500°C, preferably from 90 to 400°C, particularly preferably from 120 to 340°C. In this way, mixture A is dried within fractions of a second to give a dry material which is preferably obtained as powder.

Preferably, the hot air stream or the hot inert gas stream flows in the same direction as the introduced mixture A (concurrent process). Alternatively, the hot air stream or hot inert gas stream flows in a direction counter to that of the introduced mixture A (countercurrent process). The spraying device is preferably located in the upper part of the spray dryer, in particular the spray tower.

The dried mixture A can, after the actual spray drying, be separated off from the hot air stream or hot inert gas stream by means of a precipitator, for example a cyclone or a filter.

The dried mixture A can, for example, have an average particle diameter (D50, weight average determined by laser diffraction according to ISO 13320, for example by using a Malvern Mastersizer S in which the powder is injected with an air flux of 120 m/s) in the range from 1 to 120 µm. For the purposes of the present invention, particle diameters are preferably reported as weight averages Preference is given to the average particle diameter (D90, weight average) being up to 120 µm, particularly preferably up to 80 µm and very particularly preferably up to 40 µm. From the process according to the invention much fewer agglomerates which are formed when powder particle stick together are obtained in comparison to known processes. Much finer and much more uniform products can thus be prepared.

Drying (B) can be carried out batchwise (discontinuously) or continuously.

According to the invention the dried mixture A is subject to thermal treatment above 300 °C (C). The temperatures are particularly chosen from a range from 300 to 1200°C, preferably from 400 to 1000°C, particularly preferably from 450 to 900°C.

The thermal treatment (C) can be carried out at a set temperature or in a temperature profile having from 2 to 5 stages, preferably 3 or 4 stages. For example, it is possible to set a temperature in the range from 350 to 550°C in a first stage and a temperature in the range from 500 to 800°C in a second stage, with the temperature in the latter being higher than in the first stage. If execution of a third stage is desired, the thermal treatment in the third stage can be carried out at from 700 to 1200°C, but in any case at a temperature which is higher than that in the second stage. These stages can, for example, be produced by setting of particular heating zones or, particularly when thermal treatment (C) is to be carried out batchwise, by running a temperature-time profile.

The thermal treatment (C) can be carried out, for example, in a rotary kiln, a pendulum kiln, a muffle furnace, a roller hearth kiln (RHK), a fused silica bulb furnace, a continuous or batchwise calcinations furnace or in a push-through furnace.

The thermal treatment (C) can, for example, be carried out in a weakly oxidizing atmosphere, preferably in an inert or reducing atmosphere. For the purposes of the present invention, the term weakly oxidizing means that oxidants, for example small proportions of oxygen, are present in the atmosphere but in such small proportions that they do not oxidize iron to the oxidation state +3, for example because they are consumed by the optionally present at least one reducing agent. Examples of inert atmospheres are a noble gas atmosphere, in particular an argon atmosphere, and a nitrogen atmosphere. Examples of reducing atmospheres are nitrogen or noble gases comprising from 0.1 to 10 % by volume of carbon monoxide or hydrogen. Examples for weakly oxidizing atmospheres are air enriched with nitrogen or with carbon dioxide.
In the present invention, thermal treatment (C) can be carried out over a period of minutes to hours such as in the range from 1 minute to 24 hours, preferably in the range from 10 minutes to 3 hours.

The particles obtained after thermal treatment (C) typically have an average particle diameter (D50, weight average determined by laser diffraction according to ISO 13320, for example by using a Malvern Mastersizer S in which the powder is injected with an air flux of 120 m/s) in the same order as the powder after drying. Sometimes, the average particle diameter of the particles becomes a bit larger upon thermal treatment, for example by 5 to 25 % such as 20 %.

The electrode materials obtained by the process according to the present invention are particularly suitable for the use for the preparation of an electrode of a lithium-ion battery. Therefore, the present invention also relates to the use of the electrode materials obtained by the process according to the present invention for the preparation of an electrode of a lithium-ion battery.

The present invention further relates to an electrode comprising electrode material obtained by the process according to the present invention. To obtain an electrode as mentioned above the material obtained by the process according to the present invention is mixed with at least one electrically conducting material, described for example in WO 2004/082 047.

Suitable electrically conducting materials are for example carbon black, graphite, carbon fibres, carbon nanofibres, carbon nanotubes or electrically conducting polymers. Typically 2.0 to 40% by weight of the at least one electrically conducting material are used together with the compound according to general formula (I) in the electrode. To obtain the electrode the electrically conducting material and the compound according to general formula (I) are mixed, optionally in the presence of an organic solvent and optionally in the presence of an organic binder, for example polyvinylidene-difluoride (PVDF), and this mixture is optionally formed and dried. A temperature of 80 to 150 °C is applied in the drying step.

The electrode materials obtained by the process according to the invention have good usability for production of electrodes. For example, they can be processed to give pastes with good rheological properties.

The geometry of electrodes according to the invention can be selected within wide limits. It is preferable to configure electrodes according to the invention in thin films, for example in films with a thickness in the range from 10 µm to 250 µm, preferably 20 to 130 µm.

Preferably, electrodes according to the invention comprise a foil, for example a metal foil, especially an aluminum foil, or a polymer film, for example a polyester film, which may be untreated or siliconized. The film is coated on one or both sides with electrode material obtained by the process according to the invention.

The electrodes according to the invention are particularly useful in lithium-ion batteries. Therefore, the present invention relates to lithium-ion batteries containing at least one electrode according to the invention. Lithium-ion batteries usually comprise a counter electrode, which is defined in the context of the present invention as the anode and which may be, for example, a carbonaceous anode, such as an anode out of graphite, hard carbon or soft carbon, a lithium anode, a silicon anode, a lithium titanate anode, a tin-based anode, for example an amorphous tin-based composite oxide anode, an aluminum alloy anode, an anode from ternary metal vanadate alloyed with metals such as Al, Sn, and/or Sb, or metalloids such as Si, or intermetallic compounds as CoSn, Cu₆Sn₅, Cu₂Sb (e.g. microporous Cu₆Sn₅-Sn Anodes), metal/metalloid nanotubes, or an anode from silicone or nanomaterials such as hollow Fe₃O₄.

The lithium-ion batteries according to the invention may additionally comprise further constituents, for example conductive salt, nonaqueous solvent, separator, output conductor, for example composed of a metal or an alloy, cable connections, and housing.

Preferably, lithium-ion batteries according to the invention comprise at least one nonaqueous solvent which may be liquid or solid at room temperature, preferably being polymers, cyclic or noncyclic ethers, cyclic or noncyclic acetals, cyclic or noncyclic organic carbonates, or any mixture thereof.

Examples of suitable polymers for the use as nonaqueous solvent in lithium-ion batteries are especially polyalkylene glycols, preferably poly-C₁-C₄-alkylene glycols or especially polyethylene glycols. These polyethylene glycols may comprise up to 20 mol-% of one or more C₁-C₄-alkylene glycols in copolymerized form. The polyalkylene glycols are preferably polyalkylene glycols double-capped by methyl or ethyl.

The weight-average molecular weight M_{w} of suitable polyalkylene glycols and especially of suitable polyethylene glycols may be at least 400 g/mol.

The weight-average molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (II) and (III) 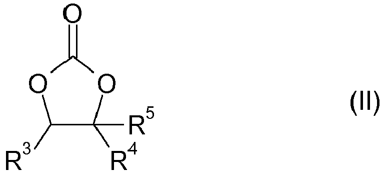 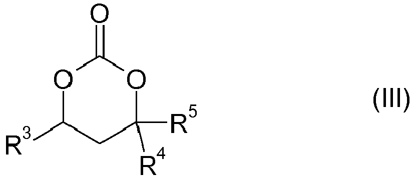 in which R³, R⁴ and R⁵ may be the same or different and are selected from hydrogen and C₁-C₄-alkyl, for example methyl, ethyl, n-propyl, isopropyl, n-butyl, isobutyl, sec-butyl and tert-butyl, where R⁴ and R⁵ are preferably not both tert-butyl.

Particularly preferably, R³ is methyl and R⁴ and R⁵ are each hydrogen, or R⁵, R³ and R⁴ are each hydrogen.

Another preferred cyclic organic carbonate is vinylene carbonate, formula (IV).

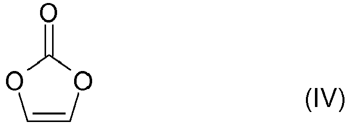

The solvent(s) is (are) preferably used in what is known as the anhydrous state, i.e. with a water content in the range from 1 ppm to 0.1 % by weight with regard to the total mass of the solvent(s), determinable, for example, by Karl Fischer titration.

Lithium-ion batteries according to the invention typically further comprise at least one conductive salt. Suitable conductive salts are especially lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄, or salts of the general formula (CₙF₂ₙ₊₁SO₂)ₘYLi, where m is defined as follows:
m = 1 when Y is selected from oxygen and sulfur,
m = 2 when Y is selected from nitrogen and phosphorus, and
m = 3 when Y is selected from carbon and silicon,
or any mixture thereof.

Preferred conductive salts are LiC(CF₃SO₂)₃, LiN(CF₃SO₂)₂, LiPF₆, LiBF₄, LiClO₄, LiPF₆, or LiN(CF₃SO₂)₂, or any mixture thereof. Particularly preferred are LiPF₆ and/or LiN(CF₃SO₂)₂

Typically, lithium-ion batteries according to the invention comprise one or more separators by which the electrodes are mechanically separated. Suitable separators are polymer films, especially porous polymer films, which are unreactive toward metallic lithium. Particularly suitable materials for separators are polyolefins, especially porous polyethylene in film form and porous polypropylene in film form.

Separators made from polyolefin, especially made from polyethylene or polypropylene, may have a porosity in the range from 35 to 45%. Suitable pore diameters are, for example, in the range from 30 to 500 nm.

It is also possible to select separators from polyethyleneterephthalate (PET) nonwovens filled with inorganic particles. Such separators may have a porosity in the range from 40 to 55 %. Suitable pore diameters are, for example, in the range from 80 to 750 nm.

Lithium-ion batteries according to the invention may further comprise a housing which may have any desired shape, for example cuboidal or the shape of a cylindrical sheet. In one variant, the housing used is a metal foil elaborated as a pouch.

Lithium-ion batteries according to the invention can be combined with one another, for example in series connection or in parallel connection. Series connection is preferred.

The lithium-ion batteries according to the invention can be used in portable electric devices, such as power tools, cell phones, laptop computers. They can also be used for electric vehicles (EVs) including pure battery electric vehicles (BEVs), hybrid electric vehicles (HEVs), plug-in hybrid electric vehicles (PHEVs), and electric bicycles.

The process according to the invention yields materials which can serve as electrode materials in lithium-ion batteries. These possess high energy storage capacity. Furthermore, they show a low decrease in energy-storage capacity under high current density, particularly above 1 C or even above 6 C. The lithium ion batteries according to the invention can therefore be used in devices which need batteries with high peak power and thus a high current density.

The invention is illustrated by the following examples.

### Example 1: Preparation of mixture A.1 according to the invention

| | |
|---|---|
| 174 g | LiOH · H₂O |
| 356 g | α-FeOOH |
| 232 g | H₃PO₄ |
| 166 g | H₃PO₃ |
| 58 g | Starch |
| 69 g | Citric acid |
| 4000 g | water |

Firstly, water was filled in a reactor, equipped with mixer and heater. After heating to 70 °C Li-OH·H₂O was added and stirred until completely dissolved. Subsequently, α-FeOOH was added followed by H₃PO₄, H₃PO₃, starch, and citric acid. The mixture obtained therefrom was mixed for about another 16 h at 70 °C.

### Example 2: Comparative mixture AC.1 preparation

The mixture was prepared as for example 1, wherein no citric acid is used.

### Drying procedure for mixture A.1 and AC.1

Mixtures A.1 and AC.1 respectively were spray-dried using N₂ (25 m³/h) as drying gas, applying the following spray-drying parameters:

| | |
|---|---|
| Tᵢₙ | 280 °C |
| Tₒᵤₜ | 120 °C |

Finally, the yellow spray-powder was collected.

### Calcination procedure for mixture A.1 and AC.1

60 g of dried mixtures A.1 and AC.1 respectively were calcined in a rotary quarz-bulb. The rotary bulb rotated with 10 rpm. The spray-powder sample is heated from room temperature to 700 °C with a heating rate of 11.33 C/min. The material was calcined at 700 °C for 1 h under N₂ flow (16 L/h). Subsequently, the material was cooled down to room temperature.
The black, calcined material obtained therefrom is sieved to a fraction of < 50 µm.

### Electrochemical testing

Electrodes were fabricated with a mixture of the material obtained above, conductive carbon, and binder at a weight ratio of 80:10:10. The electrode loading was 4-5 mg/cm².
The EC performance was tested in half-cells using a Whatman GF/D glass fiber separator and a 1:1 mixture of ethylene carbonate (EC) and dimethyl carbonate (DMC) containing LiPF₆ at 1 mol/l as electrolyte solution.
The cycling tests were performed between the voltage limits of 2.5 and 4 V (vs. Li⁺/Li) at room temperature, using CC-CV cycling. The cycling protocol covers rates up to 10 C, including the following cycles: 2x 0.1 C, 5x 0.2 C, 0.4 C, 0.8 C, 1.6 C, 3.2 C, 6.5 C, 10 C, 2x 0.1 C, 5x 0.2 C, and 100x 1 C. Specific capacities are referenced to the mass of LiFePO₄/C composite.

### Test results

Specific discharge capacity at different discharge rate in mAh/g and the relative rate capability in %

| Example | 0.1 C | 3.2 C | 6.5 C | 10 C | 3.2 C/0.1 C | 6.5 C/0.1 C |
|---|---|---|---|---|---|---|
| 1 | 159 | 125 | 111 | 101 | 79 % | 70 % |
| 2 | 151 | 115 | 101 | 91 | 76 % | 67 % |

## Claims

1. Process for producing an electrode material containing at least one compound of general formula (I):
Li_{a-b}M¹_{b}Fe_{1-c}M²_{c}P_{d-e}M³ₑOₓ (I),
wherein Fe has the oxidation state +2 and M¹, M², M³, a, b, c, d, e and x are:
M¹: Na, K, Rb, Cs, and/or Ca
M²: Mn, Mg, Al, Ti, Co, Ni, Cr, V, Cu, Zn, Cl, As, and/or Mo
M³: Si, S, and/or F
a: 0.8 - 1.9,
b: 0 - 0.3,
c: 0 - 0.9,
d: 0.8 - 1.9,
e: 0 - 0.5,
x: 1.0 - 8, depending on the amount and oxidation state of Li, M¹, M², P, M³, wherein compounds of general formula (I) are neutrally charged,
comprising:
(A) preparing a mixture comprising water, at least one carboxylic acid, at least one water-soluble or water-swellable organic polymer, and the precursors necessary to generate compound of general formula (I) (mixture A), wherein the weight ratio of the at least one carboxylic acid and the at least one water-soluble or water-swellable organic polymer is from 80 : 20 to 20 : 80, and
(B) drying mixture A, and
(C) heating dried mixture A to more than 300 °C.

2. Process according to claim 1, wherein the at least one carboxylic acid is aliphatic.

3. Process according to claim 1 or 2, wherein at least one carboxylic acid contains at least two carboxyl groups.

4. Process according to claim 1 or 2, wherein at least one carboxylic acid contains at least three carboxyl groups.

5. Process according to any of the claims 1 to 4, wherein the at least one organic polymer is at least one water-soluble or water-swellable polysaccharide.

6. Process according to any of the claims 1 to 4, wherein the at least one organic polymer is at least one starch.

7. Process according to any of the claims 1 to 6, wherein mixture A is heated above the pasting temperature before drying.

8. Process according to any of the claims 1 to 7, wherein a spray-drying process is used for drying mixture B.

9. Process according to any of the claims 1 to 8, wherein mixture A contains at least 65 percent by weight water.

10. Process according to any of the claims 1 to 9, wherein mixture A contains at least one iron-containing compound in the oxidation state +3.

11. Process according to any of the claims 1 to 10, wherein mixture A contains at least one reducing agent which is oxidized to a compound comprising at least one phosphorous atom in oxidation state +5.

12. Use of electrode material obtained in any of the claims 1 to 11 for the preparation of an electrode of a lithium-ion battery.

13. Method of producing a lithium-ion battery using the electrode material obtained by a process according to any of the claims 1 to 11.

14. Electrode containing electrode material obtained by a process according to any of the claims 1 to 11.

15. Lithium-ion battery containing at least one electrode according to claim 14.
